# EUROPEAN PATENT APPLICATION

(11) **EP 4 729 321 A2**
(43) Date of publication of application: **22.04.2026**
(21) Application number: 25201152.3
(22) Date of filing: 09.09.2025
(51) Int. Cl.: B60H 1/00

(54) **SYSTEMS AND METHODS FOR A CONTROL SYSTEM**

(30) Priority: 25.09.2024 US 202418896202
(71) Applicant: CNH Industrial America LLC, New Holland, PA 17557 (US); CNH Industrial Belgium N.V., 8210 Zedelgem (BE)
(72) Inventor: Ghiya, Dhruv, New Holland, 17557 (US); Ferri, Doriano, 8210 Zedelgem (BE); Hoffman, Alexander, 8210 Zedelgem (BE)
(74) Representative: CNH Industrial IP Department

(57) **Abstract**

Control system (12) including a blower (42) configured to output an airflow (46) via a blower output flow passage (60), a heating system (40) configured to receive the airflow (46) from the blower (42), a heating system valve (80) positioned between the heating system (40) and the blower (42), a computing system (84) communicatively coupled to the blower (42), the heating system (40), and the heating system valve (80), and configured to receive an input, and when the input is related to a change in state of the blower (42), to delay actuation of the blower (42) for a first time period, to alter a blower (42) state during a second time period, to maintain the heating system valve (80) in the target position during the second time period, and to alter a position of the heating system valve (80) to an operation position after an expiration of the second time period.

## Description

### FIELD OF THE INVENTION

The present subject matter relates generally to control system for a cab of a work vehicle.

### BACKGROUND OF THE INVENTION

In some cases, work vehicles (e.g., tractors, harvesters, skid steers, etc.) include a heating, ventilation, and air condition (HVAC) system configured to provide an airflow into a cab of the work vehicle. The HVAC systems may include a cooling system to cool the airflow into the cab and a heating system configured to heat the airflow into the cab. For example, the cooling system may be activated in warmer months to reduce the air temperature within the cab, and the heating system may be activated in cooler months to increase the air temperature within the cab.

Accordingly, an improved system and method for operating the HVAC systems would be welcomed in the technology.

### BRIEF DESCRIPTION OF THE INVENTION

Aspects and advantages of the technology will be set forth in part in the following description, or may be obvious from the description, or may be learned through practice of the technology.

In some aspects, the present subject matter is directed to a control system that includes a blower configured to output an airflow via a blower output flow passage. A heating system is configured to receive the airflow from the blower. A heating system valve is positioned between the heating system and the blower. The heating system valve is configured to selectively allow the airflow from the blower to the heating system. A computing system is communicatively coupled to the blower, the heating system, and the heating system valve. The computing system includes a processor and associated memory. The memory stores instructions that, when implemented by the processor, configure the computing system to receive an input, delay actuation of the blower for a first time period, alter a blower state during a second time period, the second time period after an expiration when the input is related to a change in state of the blower, maintain the heating system valve in a target position during the second time period, and alter a position of the heating system valve to an operation position after an expiration of the second time period.

In some aspects, the present subject matter is directed to a method for operating a vehicle system. The method includes receiving, from a user interface, an input. The method also includes determining, with a computing system, a change of state of a first component based on the input. Further, the method includes defining, with the computing system, a target state of a second component during a first time period. Lastly, the method includes actuating, with the computing system, the first component with the second component maintained in a target position during a second time period.

In some aspects, the present subject matter is directed to a control system that includes a blower configured to output an airflow via a blower output flow passage. A cooling system is configured to receive the airflow from the blower. A cooling system valve is positioned between the cooling system and the blower. The cooling system valve is configured to selectively allow the airflow from the blower to the cooling system. A computing system is communicatively coupled to the blower, the cooling system, and the cooling system valve. The computing system includes a processor and associated memory. The memory stores instructions that, when implemented by the processor, configure the computing system to receive an input, delay actuation of the blower for a first time period, alter a blower state during a second time period, the second time period after an expiration when the input is related to a change in a state of the blower, maintain the cooling system valve in a target position during the second time period, and alter a position of the cooling system valve to an operation position after an expiration of the second time period.

These and other features, aspects, and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 is a side view of a work vehicle that may include a control system in accordance with aspects of the present subject matter;
FIG. 2 is a schematic diagram of an HVAC system that may be employed within the work vehicle of FIG. 1 in accordance with aspects of the present subject matter;
FIG. 3 illustrates a flow diagram providing example control logic for operating the HVAC system in accordance with aspects of the present subject matter; and
FIG. 4 illustrates a flow diagram of a method for operating a vehicle system in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the disclosure, one or more examples of which are illustrated in the drawings. Each example is provided by way of explanation of the discourse, not limitation of the disclosure. In fact, it will be apparent to those skilled in the art that various modifications and variations may be made in the present disclosure without departing from the scope of the appended claims. For instance, features illustrated or described as part may be used with another embodiment to yield a still further embodiment. Thus, it is intended that the present disclosure covers such modifications and variations as come within the scope of the appended claims and their equivalents.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises... a" does not, without more constraints, preclude the existence of additional identical elements in the process, method, article, or apparatus that comprises the element.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to an agricultural product within a fluid circuit. For example, "upstream" refers to the direction from which an agricultural product flows, and "downstream" refers to the direction to which the agricultural product moves. The term "selectively" refers to a component's ability to operate in various states (e.g., an ON state and an OFF state) based on manual and/or automatic control of the component.

Furthermore, any arrangement of components to achieve the same functionality is effectively "associated" such that the functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected" or "operably coupled" to each other to achieve the desired functionality, and any two components capable of being so associated can also be viewed as being "operably couplable" to each other to achieve the desired functionality. Some examples of operably couplable include, but are not limited to, physically mateable, physically interacting components, wirelessly interactable, wirelessly interacting components, logically interacting, and/or logically interactable components.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

Moreover, the technology of the present application will be described in relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

As used herein, the term "and/or," when used in a list of two or more items, means that any one of the listed items may be employed by itself, or any combination of two or more of the listed items may be employed. For example, if a composition or assembly is described as containing components A, B, and/or C, the composition or assembly can contain A alone; B alone; C alone; A and B in combination; A and C in combination; B and C in combination; or A, B, and C in combination.

In general, the present subject matter is directed to a vehicle system that is configured to receive an input from a user interface. In turn, a computing system, may determine a change of state of a first component based on the input. In such instances, the computing system may define a target state of a second component during a first time period. After, the computing system may actuate the first component with the second component maintained in the target position during a second time period. In various examples, each of the first component and the second component may be powered by a common power supply. In several examples, the second time period may be based on a time for actuating the first component and/or the time for a power supply to return to a defined state after actuation of the first component. For instance, the defined state may be a predictable or steady state of the power supply, which may be varied by the actuation of the first component.

Additionally, in various examples, the first component may be a blower of an HVAC system and the second component may be a valve within the HVAC system. However, the first component and the second component may be any other component of the vehicle without departing from the teachings of the present disclosure. In some cases, allowing the computing system to activate the heating system valve (and/or any other component) at varied times from the activation of other components may mitigate occurrences of unexpected stalls in the heating system valve (and/or any other component) and, possibly, increase the performance of the HVAC system. For instance, the HVAC system may include low torque stepper motor actuators, like a heater valve, a recirculation flap, an air-distribution actuator, etc. Stalls in these actuators may cause the HVAC system performance to degrade. These stalls may happen when there is a sudden change in power supply. In some cases, a change in state of powered components (e.g., compressors, vehicle headlights, engine components, such as cooling fans, and/or other electrical accessories) causes the power supply to have power spikes. By holding the actuators for a time period when such spikes are expected, and continuing their normal operation once the state of the component has already changed, the stalls in these actuators may be mitigated, which, in turn, may improve the HVAC system performance.

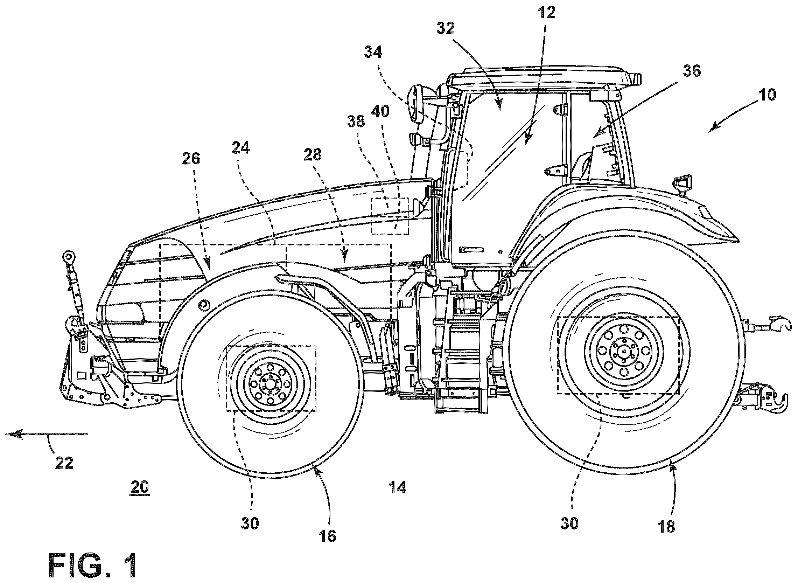

Referring now to drawings, FIG. 1 illustrates a work vehicle 10 that may include a control system 12 in accordance with various aspects of the present disclosure. While the work vehicle 10 is generally illustrated as a self-propelled tractor, in alternate embodiments, the work vehicle 10 may be configured as any other suitable type of work vehicle 10 configured to perform agricultural application operations, such as an agricultural applicator, combine, harvester, or other vehicle configured to haul or tow an application implement.

In various examples, the work vehicle 10 may include a chassis 14 configured to support or couple to a plurality of components. For example, front and rear wheels 16, 18 may be coupled to the chassis 14. The wheels 16, 18 may be configured to support the work vehicle 10 relative to a ground surface 20 and move the work vehicle 10 in a direction of travel (e.g., as indicated by arrow 22 in FIG. 1) across the ground surface 20. In this regard, the work vehicle 10 may include a power source 24 that may include a power plant 26, such as an engine, a motor, or a hybrid engine-motor combination, a transmission, and/or hydraulic propel system 28 configured to transmit power from the engine to the wheels 16, 18, and/or a brake system 30.

The chassis 14 may also support a cab 32, or any other form of user's station, permitting the user to control the operation of the work vehicle 10. For instance, as shown in FIG. 1, the work vehicle 10 may include a user interface 34, which may include a display for providing messages and/or alerts to the user. The user interface 34 may additionally or alternatively allow the user to interface with the vehicle's controller through one or more user input devices (e.g., levers, pedals, control panels, buttons, and/or the like).

In addition, the control system 12 include a heating, ventilation, and air conditioning (HVAC) system 36 that can be configured to control an air temperature within the cab 32. The HVAC system 36 may include a cooling system 38 to cool the airflow into the cab 32 and/or a heating system 40 configured to heat the airflow into the cab 32. For example, the cooling system 38 may be activated in warmer months to reduce the air temperature within the cab 32, and the heating system 40 may be activated in cooler months to increase the air temperature within the cab 32.

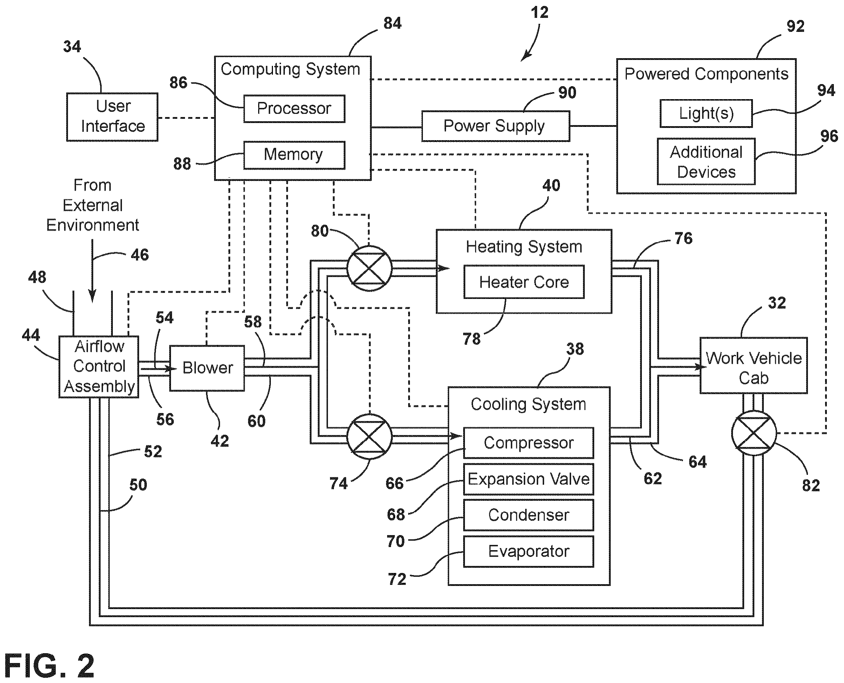

Referring now to FIG. 2, a schematic diagram of an HVAC system 36 that may be employed within the work vehicle 10 of FIG. 1 is illustrated in accordance with various aspects of the present disclosure. In some examples, the HVAC system 36 may include a blower 42, the cooling system 38, the heating system 40, and an airflow control assembly 44. The airflow control assembly 44 may be configured to control the mixing of air from an environment external to the cab 32 with air recirculated from the cab 32. As illustrated, the airflow control assembly 44 may be configured to receive an airflow 46 (e.g., system input airflow) from the environment external to the cab 32 via a system input flow passage 48. Additionally or alternatively, the airflow control assembly 44 may be configured to receive an airflow 50 (e.g., cab output airflow) from an interior of the cab 32 via a cab output flow passage 52.

The airflow control assembly 44 is configured to control the mixing of the external air with the recirculated air (e.g., from the cab 32) and to output an airflow 54 (e.g., blower input airflow) to the blower 42 via a blower input flow passage 56.

The blower 42 may be configured to receive the airflow 54 from the airflow control assembly 44 and to output an airflow 58 (e.g., blower output airflow) via a blower output flow passage 60. The cooling system 38 and/or the heating system 40 may be configured to receive the airflow 58 from the blower 42. In some instances, the blower 42 may be configured as a compressor and/or any other fluid-moving device.

The cooling system 38 may be configured to output a chilled airflow 62 (e.g., cooling system output airflow) via an output flow passage 64. The output flow passage 64 may be configured to receive the airflow 62 from the cooling system 38 and to direct the airflow 62 toward the cab 32 of the work vehicle 10. As used herein, "toward" refers to directing an airflow along at least a portion of a flow path that ultimately reaches a target (e.g., the cab 32 of the work vehicle 10). Accordingly, an airflow toward a target does not necessarily flow in the direction of the target (e.g., based on the configuration of the flow path).

The airflow through the cooling system 38 may flow through a refrigeration system, thereby producing the chilled airflow 62, which has a lower temperature than the input airflow 58. For example, the refrigeration system may include an evaporator 66, a compressor 68, an expansion valve 70, and a condenser 72. The airflow may flow through the evaporator 66 to reduce the temperature of the airflow. While a refrigeration system is described above, the cooling system 38 may utilize any suitable device/system to reduce the temperature of the airflow (e.g., a Peltier device, etc.).

In various examples, the HVAC system 36 may include a cooling system valve 74 configured to control (e.g., selectively block) the airflow 58 from the blower 42 to the cooling system 38. Accordingly, while the cooling system valve 74 is open, the airflow 58 from the blower 42 may enter the cooling system 38. In turn, the chilled airflow 62 flows through the output flow passage 64 to the cab 32. While the cooling system valve 74 is closed, the airflow 58 from the blower 42 is generally blocked from the cooling system 38. For example, if a chilled airflow 62 to the cab 32 is desired (e.g., during warmer months), the cooling system valve 74 may be opened. And, if a chilled airflow 62 to the cab 32 is not desired (e.g., during colder months), the cooling system valve 74 may be closed.

The heating system 40 may be configured to output a heated airflow 76 (e.g., heating system output airflow) via an output flow passage 64. The output flow passage 64 may be configured to receive the airflow 76 from the heating system 40 and to direct the airflow 76 toward the cab 32 of the work vehicle 10.

In several examples, the heating system 40 may include a heater core 78, which may receive hot coolant from the engine of the work vehicle 10. As the air flows through the heater core 78, the temperature of the air increases, thereby establishing a heated airflow 76 (e.g., heating system output airflow). The heated airflow 76 flows through an output flow passage 64 to the cab 32 of the work vehicle 10. While a heater core 78 is described above, the heating system 40 may include any other suitable heating system/device to heat the airflow 76 into the cab 32 (e.g., an electric heater, etc.).

In several examples, the HVAC system 36 may include a heating system valve 80 configured to control (e.g., selectively block) the airflow 58 from the blower 42 to the heating system 40. Accordingly, while the heating system valve 80 is open, the airflow 58 from the blower 42 may enter the heating system 40. In turn, the heated airflow 76 flows through the output flow passage 64 to the cab 32. While the heating system valve 80 is closed, the airflow 58 from the blower 42 is generally blocked from the heating system 40. For example, if a heated airflow 76 to the cab 32 is desired (e.g., during colder months), the heating system valve 80 may be opened. And, if a heated airflow 76 to the cab 32 is not desired (e.g., during warmer months), the heating system valve 80 may be closed.

Further, in some examples, the HVAC system 36 may also include a recirculation valve 82 configured to control (e.g., selectively block) the airflow 50 from cab 32 to the airflow control assembly 44. Accordingly, while the recirculation valve 82 is open, the airflow 50 from the cab 32 may enter the airflow control assembly 44. In turn, the recirculated airflow 50 flows through the cab output flow passage 52. While the recirculation valve 82 is closed, the airflow 50 from the cab 32 is generally blocked from the airflow control assembly 44. For example, if a recirculation airflow 50 is desired, the recirculation valve 82 may be opened. And, if a recirculation airflow 50 to the cab 32 is not desired, the recirculation valve 82 may be closed.

While the cooling system 38 and the heating system 40 are shown in parallel, the cooling system 38 and the heating system 40 may be in series or designed in any other manner. Moreover, the cooling system 38 and/or the heating system 40 may be omitted from the vehicle 10 without departing from the scope of the present disclosure.

In some examples, a computing system 84 may be communicatively coupled to the blower 42, the cooling system 38, the heating system 40, the airflow control assembly 44, the cooling system valve 74, the heating system valve 80, the recirculation valve 82, and/or any other component. The computing system 84 may be configured to control the cooling system valve 74, the heating system valve 80, and/or the recirculation valve 82 of the control system 12 (along with any other valve(s) within the HVAC system 36) thereby controlling the airflow through the HVAC system 36. In addition, the computing system 84 may be configured to control the airflow 58 output by the blower 42, and/or the capacity of the cooling system 38 and/or the heating system 40, thereby controlling the airflow 62, 76 (e.g., a temperature of the airflow, a flow rate of the airflow, etc.) into the cab 32. In various examples, the computing system 84 may be communicatively coupled to the user interface 34. The user interface 34 may be located within the cab 32 of the work vehicle 10 and configured to receive input from the operator, such as input for controlling the control system 12, the blower 42, the cooling system 38, the heating system 40, and/or a combination thereof.

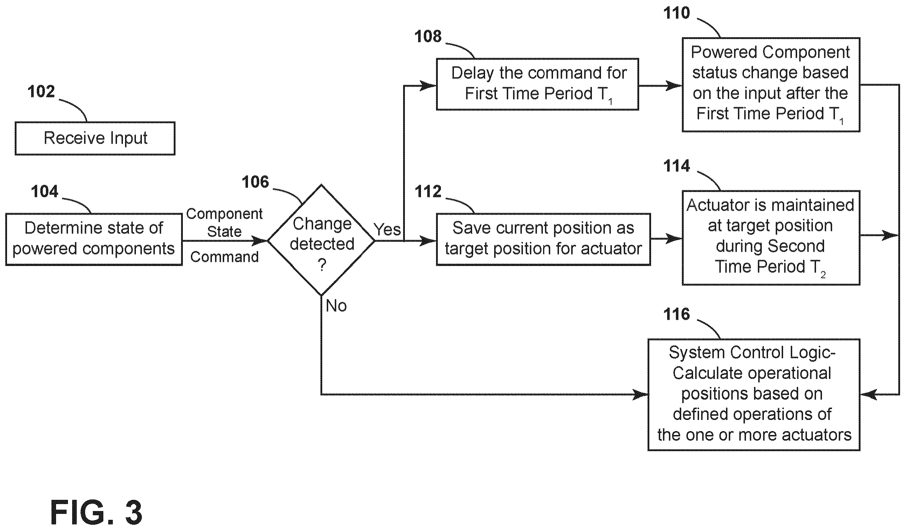

In general, the computing system 84 may include any a suitable processor-based device, such as a computing device or any suitable combination of computing devices. Thus, in several embodiments, the computing system 84 may include one or more processors 86 and associated memory 88 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory 88 of the computing system 84 may generally comprise memory element(s) including, but not limited to, a computer-readable medium (e.g., random access memory (RAM)), a computer-readable non-volatile medium (e.g., a flash memory), a floppy disk, a compact disc-read only memory (CD-ROM), a magneto-optical disk (MOD), a digital versatile disc (DVD) and/or other suitable memory elements. Such memory 88 may generally be configured to store suitable computer-readable instructions that, when implemented by the processors 86, configure the computing system 84 to perform various computer-implemented functions, such as implement the control logic 100 of FIG. 3 for controlling the HVAC system 36, and so forth. In addition, the computing system 84 may also include various other suitable components, such as a communications circuit or module, one or more input/output channels, a data/control bus, and/or the like.

It will be appreciated that, in several embodiments, the computing system 84 may correspond to an existing controller of the work vehicle 10, or the computing system 84 may correspond to one or more separate processing devices. For instance, in some embodiments, the computing system 84 may form all or part of a separate plug-in module or computing device(s) that is installed relative to the work vehicle 10 or implement 14 to allow for the disclosed system 12 and method to be implemented without requiring additional software to be uploaded onto existing control devices of the work vehicle 10 or implement 14.

The computing system 84 is configured to control the valves 74, 80, 82 of the control system 12, thereby controlling airflow through the HVAC system 36. In addition, the computing system 84 is configured to control the blower 42, the cooling system 38, and the heating system 40 to provide a desired airflow 62, 76 (e.g., air flow rate, air temperature, etc.) to the cab 32 of the work vehicle 10. For example, to provide chilled air to the cab 32 of the work vehicle 10 (e.g., in response to input from the user interface 34), the computing system 84 may activate the cooling system 38 and deactivate the heating system 40. In addition, the computing system 84 may instruct the cooling system valve 74 to open. As a result, the chilled air from the cooling system 38 may flow toward the cab 32 of the work vehicle 10, thereby reducing the air temperature within the cab 32. Additionally or alternatively, to provide heated air to the cab 32 of the work vehicle 10 (e.g., in response to input from the user interface 34), the computing system 84 may activate the heating system 40 and deactivate the cooling system 38. In addition, the computing system 84 may instruct the heating system valve 80 to open. As a result, the heated air from the heating system 40 may flow toward the cab 32 of the work vehicle 10, thereby increasing the air temperature within the cab 32.

In addition, the computing system 84 may be configured to adjust the airflow 58 output from the blower 42 (e.g., a pressure of the airflow, a flow rate of the airflow, etc.) based at least in part on whether airflow 62, 76 to the cab 32 is desired. For example, while airflow 62, 76 to the cab 32 is desired, the computing system 84 may determine the blower output sufficient to provide the desired airflow 62, 76 to the cab 32 (e.g., based on input from the user interface 34). The computing system 84 may then instruct the blower 42 to provide the determined airflow 58 output. As provided herein, the computing system 84 may also actuate the recirculation valve 82 to control (e.g., selectively block) the airflow 50 from cab 32 to the airflow control assembly 44.

In addition, the computing system 84 may be configured to adjust the capacity of the cooling system 38 based at least in part on whether chilled airflow 62 to the cab 32 is desired. For example, while chilled airflow 62 to the cab 32 is desired, the computing system 84 may determine the cooling system capacity sufficient to provide airflow 62, 76 of a desired temperature to the cab 32 (e.g., based on input from the user interface 34). The computing system 84 may then instruct the cooling system 38 to operate at the determined capacity. Additionally or alternatively, the computing system 84 may be configured to adjust the capacity of the heating system 40 based at least in part on whether heated airflow 76 to the cab 32 is desired. For example, while heated airflow 76 to the cab 32 is desired, the computing system 84 may determine the heating system capacity sufficient to provide airflow 62, 76 of a desired temperature to the cab 32 (e.g., based on input from the user interface 34). The computing system 84 may then instruct the heating system 40 to operate at the determined capacity.

While each of the valves 74, 80, 82 disclosed above is configured to selectively block flow through a respective flow passage, in certain examples, one or more of the valves 74, 80, 82 may be configured to control flow through the respective flow passage(s). For example, in certain examples, one or more valves 74, 80, 82 may be proportional control valve(s) configured to control the pressure and/or the flow rate through the respective passage(s) based on a position of the valve(s) (e.g., fully open, partially open, or fully closed). By way of example, the computing system 84 may control the airflow 58 output from the blower 42, the capacity of the cooling system 38, the capacity of the heating system 40, or a combination thereof, to provide an airflow 62, 76 into the cab 32 having a target/desired temperature.

With further reference to FIG. 2, the HVAC system 36, the computer system, and/or the user interface 34 may be operably coupled with a power supply 90. In various examples, the power supply 90 may be powered by the power source 24 (FIG. 1) of the vehicle 10, and/or through any other system/component such as a battery or other power-storing device. In addition to the HVAC system 36, the computing system 84, and the user interface 34, additional powered components 92 of the work vehicle 10 may also be operably coupled with the power supply 90. For instance, a vehicle light(s) 94 or other powered devices 96 may provide illumination within and/or externally of the vehicle 10 when powered by the power supply 90. When the HVAC system 36 and/or other powered components 92 change states, which may be based on an input received through the user interface 34 and/or through any other method, the power supply 90 may be altered from a defined state. For instance, the defined state may be a predictable or steady state of the power supply 90. In some cases, upon receiving an input to change states of the HVAC system 36 and/or one or more powered components 92, the computing system 84 may be configured to delay the alteration between states for a defined period of time such that any actuable components of the vehicle 10 may have a position thereof stored before altering any components to meet the inputted changed state. For example, when the HVAC system 36 cools down, defogs, and/or is altered in any other manner, the blower 42 may be commanded to activate or deactivate. When the blower 42 is turned on, there may be a drop in power to the heating system valve 80 (and/or any other component). Conversely, when the blower 42 switches off, there may be a surge in power to the heating system valve 80 (and/or any other component). This may cause the heating system valve 80 to stall from time to time. As the time at which the blower 42 activates or deactivates is known based on a defined input, a time of the state change leading to the change in power supply 90 may also be known. Accordingly, the computing system 84 may determine a position of the heating system valve 80 (and/or any other component) as soon as the change is detected. The determined position of the heating system valve 80 may be set as a target position ensuring that the heating system valve 80 is maintained in its determined position. To ensure that the valve is in the target position, the computing system 84 may delay the activation/deactivation of the blower 42 for a first time period. After a second time period, during which the blower state may change (e.g., the blower 42 has been activated/deactivated), the heating system valve 80 may be moved to an operational position, which may vary from the target position. In some cases, the first time period is greater than the second time period. In such instances, the heating system valve 80 may be stationary when the power supply 90 provides a varied amount of power and moves when the power supply 90 is expected to be generally consistently predictable. In some cases, allowing the computing system 84 to activate the heating system valve 80 (and/or any other component) at varied times from the activation of other components may mitigate occurrences of unexpected stalls in the heating system valve 80 (and/or any other component) and, possibly, increase the performance of the HVAC system 36.

Referring now to FIG. 3, a flow diagram of example control logic 100 that may be executed by the airflow control system 12 and the computing system 84 is illustrated in accordance with aspects of the present subject matter. The control logic 100 shown in FIG. 3 is representative of steps of a data processing algorithm that may be executed to control the HVAC system without requiring substantial computing resources and/or processing time. Thus, in several embodiments, the control logic 100 may be utilized in association with an airflow system installed on or forming part of an agricultural vehicle. In other examples, the control logic 100 may be used in association with any other suitable system, application, and/or the like for controlling an HVAC system and/or any other powered component.

At (102), the control logic 100 includes receiving an input. As provided herein, the input may be received through a user interface and/or through any other source. In various examples, the input may be related to controlling the control system, the blower, the cooling system, the heating system, and/or a combination thereof.

At (104), the control logic 100 may include determining a state of one or more powered components. As provided herein, various powered components of the vehicle, such as compressors, headlights, engine cooling fans, and/or other electrical accessories, may be placed in a deactivated state and/or various activation states based on settings or conditions of the powered component.

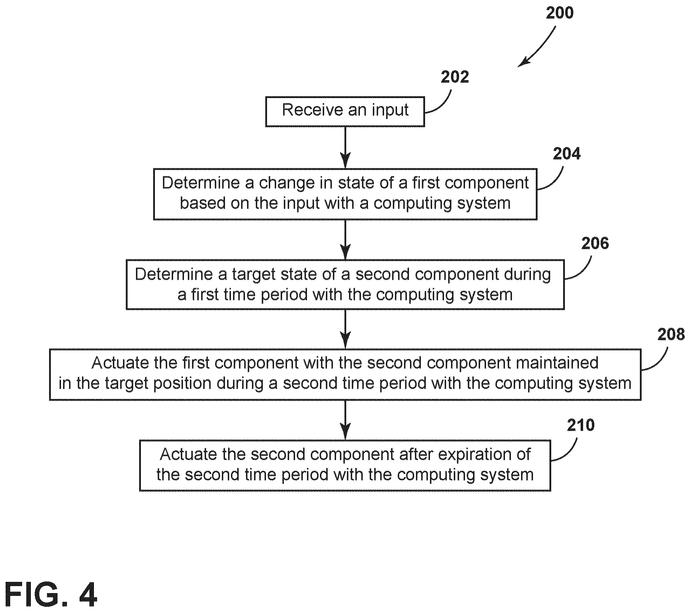

At (106), the control logic 100 may include determining whether the input may cause a change in power provided to the one or more powered components. For instance, if the vehicle headlights are activated and the control logic 100 receives an input to activate the headlights, no change is detected. Conversely, if the vehicle headlights are deactivated and the control logic 100 receives an input to activate the headlights, a change is detected and a potential power spike or variation from the power supply may be caused by the actuation of the headlights. A common determination may be made for each powered component of the vehicle and a predicted variation in the power supply may be based on the powered component(s) that are to be activated or deactivated. In various examples, the control logic 100 may implement machine learning engine methods and algorithms that utilize one or several machine learning techniques including, for example, decision tree learning, including, for example, random forest or conditional inference trees methods, neural networks, support vector machines, clustering, and Bayesian networks. These algorithms can include computer-executable code that can be retrieved by a computing system 84 (FIG. 4) and may be used to generate a predicted power variation of any of the powered component(s).

If a change is detected at (106), at (108), a delay of a first time period may be implemented. Next, at (110), the control logic 100 may alter the powered components (such as a component of the HVAC system) for a second time period T₂.

During the first time period, at (112), the position of one or more actuators within the vehicle may be stored as a target position. For example, the HVAC system may include low torque stepper motor actuators in the form of a heater valve, a recirculation flap, an air-distribution actuator, etc. Additional vehicle systems may include any other actuator without departing from the teachings herein. At (114), any or all of the one or more actuators may be maintained in the target position during the second time period T₂.

If there is no change in state detected at (106) or after (110) and (114), the control logic 100, at (116), may proceed with the system control logic for one or more vehicle systems. For instance, HVAC system control logic may be implemented that alters a position or state of the one or more actuators from the target position to an operational position (if a change is needed) based on the defined operations of the actuators. The control logic 100 defined herein may mitigate potential stalls by the one or more actuators when there is a sudden change in power supply. In some cases, a change in state of powered components (e.g., compressors, vehicle headlights, engine components, such as cooling fans, and/or other electrical accessories) causes the power supply to have power spikes. By holding the actuators for a time period when such spikes are expected, and continuing their normal operation once the state of the component has already changed, the stalls in these actuators may be mitigated, which, in turn, may improve the HVAC system (or any other vehicle system) performance.

As such, with the control logic 100 provided herein, the heating system valve may be maintained in a target location when the power supply is expected to change and move to an operational position when the power supply is expected to be constant. In some instances, the control logic 100 may mitigate unexpected stalls in the actuators of the heating system valve (and/or any other component) and/or otherwise increase the performance of the HVAC system.

It will be appreciated that while the control logic is described in reference to controlling the heating system valve and the blower, any component may be controlled similarly without departing from the teachings provided here. In such instances, actuation/activation of a first component may be delayed so that a position of a second component may be defined as a target position/state. In turn, the first component may be actuated/activated with the second component maintained in the target position/state. In turn, when the second component is finished actuating/deactivated, and/or the power supply has returned to a more predictable state, the second component may be target actuated/activated.

Referring now to FIG. 4, a flow diagram of a method 200 for operating a vehicle system is illustrated in accordance with aspects of the present subject matter. In general, the method 200 will be described herein with reference to the components described in FIGS. 1-3. However, it will be appreciated that the disclosed method 200 may be implemented with vehicles having any other suitable configurations and/or within systems having any other suitable system configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein may be omitted, rearranged, combined, and/or adapted in various ways without deviating from the scope of the present disclosure.

As illustrated, at (202), the method 200 can include receiving an input from a user interface. As provided herein, the user interface may include a display for providing messages and/or alerts to the user. The user interface 34 may additionally or alternatively allow the user to interface with the vehicle's controller through one or more user input devices (e.g., levers, pedals, control panels, buttons, and/or the like).

At (204), the method 200 can include determining a change of state of a first component based on the input with a computing system. For instance, one or more components of an HVAC system may be actuated based on the input. Additionally or alternatively, one or more components of a light system may be actuated based on the input. Additionally or alternatively, any other power component may be actuated based on the input.

At (206), the method 200 may include defining a target state of a second component during a first time period with the computing system. In various examples, each of the first component and the second component may be powered by a common power supply. In some cases, the first component may be a blower of an HVAC system and the second component may be a valve within the HVAC system.

At (208), the method 200 may include actuating the first component with the second component maintained in the target position during a second time period with the computing system. At (210), the method 200 may include actuating the second component after the expiration of the second time period with the computing system. In several examples, the second time period may be based on a time for actuating the first component and/or the time for a power supply to return to a defined state after actuation of the first component. For instance, the defined state may be a predictable or steady state of the power supply, which may be varied by the actuation of the first component. Moreover, in various examples, the first time period may be greater than the second time period. However, the first time period may be less than or equal to the second time period without departing from the scope of the present disclosure.

In various examples, the method 200 may implement machine learning methods and algorithms that utilize one or several machine learning techniques including, for example, decision tree learning, including, for example, random forest or conditional inference trees methods, neural networks, support vector vehicles, clustering, and Bayesian networks. These algorithms can include computer-executable code that may be retrieved by the computing system and/or through a network/cloud and may be used to evaluate and update the boom deflection model. In some instances, the machine learning engine may allow for changes to the boom deflection model to be performed without human intervention.

It is to be understood that the steps of any method disclosed herein may be performed by a computing system upon loading and executing software code or instructions that are tangibly stored on a tangible computer-readable medium, such as on a magnetic medium, e.g., a computer hard drive, an optical medium, e.g., an optical disc, solid-state memory, e.g., flash memory, or other storage media known in the art. Thus, any of the functionality performed by the computing system described herein, such as any of the disclosed methods, may be implemented in software code or instructions that are tangibly stored on a tangible computer-readable medium. The computing system loads the software code or instructions via a direct interface with the computer-readable medium or via a wired and/or wireless network. Upon loading and executing such software code or instructions by the controller, the computing system may perform any of the functionality of the computing system described herein, including any steps of the disclosed methods.

The term "software code" or "code" used herein refers to any instructions or set of instructions that influence the operation of a computer or controller. They may exist in a computer-executable form, such as vehicle code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A control system (12) comprising a blower (42) configured to output an airflow (46) via a blower output flow passage (60) and a heating system (40) configured to receive the airflow (46) from the blower (42), the control system (12) **characterized by**:
a heating system valve (80) positioned between the heating system (40) and the blower (42), the heating system valve (80) configured to selectively allow the airflow (46) from the blower (42) to the heating system (40); and
a computing system (84) communicatively coupled to the blower (42), the heating system (40), and the heating system valve (80), the computing system (84) including a processor and associated memory (88), the memory storing instructions that, when implemented by the processor, configure the computing system (84) to:
receive an input;
delay actuation of the blower (42) for a first time period;
alter a blower (42) state during a second time period, the second time period after an expiration when the input is related to a change in state of the blower (42);
maintain the heating system valve (80) in a target position during the second time period; and
alter a position of the heating system valve (80) to an operation position after an expiration of the second time period.

2. The control system (12) of claim 1, wherein the first time period is greater than the second time period.

3. The control system (12) of any preceding claim, further comprising:
a cooling system (38) configured to receive the airflow (46) from the blower (42);
and
a cooling system valve (74) positioned between the cooling system (38) and the blower (42), the cooling system valve (74) configured to selectively allow the airflow (46) from the blower (42) to the cooling system (38).

4. The control system (12) of claim 3, wherein the cooling system (38) and the heating system (40) are in parallel.

5. The control system (12) of any one of claim 3 or claim 4, wherein the computing system (84) is further configured to:
maintain the cooling system valve (74) in the target position during the second time period; and
alter a position of the cooling system valve (74) to an operation position after an expiration of the second time period.

6. The control system (12) of any preceding claim,
a power supply (90) operably coupled with the blower (42), the heating system (40), and the heating system valve (80), wherein the computing system (84) is further configured to:
determine an upcoming change in power supply (90) output based at least in part on an upcoming change of state for one or more components operably coupled with the power supply (90).

7. The control system (12) of any preceding claim, wherein the input is related to a change in a state of a light system, and wherein the computing system (84) is further configured to:
maintain the heating system valve (80) in the target position while the light system is activated.

8. The control system (12) of any preceding claim, further comprising:
a user interface (34) configured to receive the input.

9. The control system (12) of any preceding claim, wherein the second time period is based on a time for a power supply (90) to return to a defined state after actuation of the blower (42).

10. A method (200) for operating a vehicle system, the method (200) comprising receiving, from a user interface (34), an input, the method (200) **characterized by**:
determining, with a computing system (84), a change of state of a first component based on the input;
defining, with the computing system (84), a target state of a second component during a first time period; and
actuating, with the computing system (84), the first component with the second component maintained in a target position during a second time period.

11. The method (200) of claim 10, further comprising:
actuating, with the computing system (84), the second component after an expiration of the second time period.

12. The method (200) of any preceding claim, wherein the second time period is based on a time for actuating the first component and/or the time for a power supply (90) to return to a defined state after actuation of the first component.

13. The method (200) of any preceding claim, wherein the first time period is greater than the second time period.

14. The method (200) of any preceding claim, wherein the first component is a blower (42) of an HVAC system (36) and the second component is a valve within the HVAC system (36).
